# EUROPEAN PATENT SPECIFICATION

(11) **EP 3 054 712 B1**
(45) Date of publication and mention of the grant of the patent: **22.01.2020**
(21) Application number: 15000328.3
(22) Date of filing: 04.02.2015
(51) Int. Cl.: H04W 8/18, H04W 8/20, H04W 8/28

(54) **A method for changing a subscription for a mobile telecommunications network on a security module**
Verfahren zum Ändern eines Abonnements für ein Mobilfunknetzwerk auf einem Sicherheitsmodul
Procédé permettant de modifier un abonnement à un réseau de télécommunications mobiles sur un module de sécurité

(43) Date of publication of application: 10.08.2016
(73) Proprietor: Giesecke+Devrient Mobile Security GmbH, 81677 München (DE)
(72) Inventor: Granath, Dennis, 120 57 Ärsta (SE); Persson, Jonas, 14242 Skogås (SE); Volcz, Niklas, 112 58 Stockholm (SE)

(56) References cited:
- US-A1- 2002 197 991
- US-A1- 2012 282 891
- US-B2- 8 918 143

## Description

The invention refers to a method and a system for changing a subscription for a mobile telecommunications network on a security module.

In a mobile telecommunications network, such as a GSM or UMTS network, subscribers are identified by subscriptions having unique subscriber identities stored on security modules. These security modules are associated with respective mobile equipments used for communicating in the mobile telecommunications network. Number codes are used for calling a subscriber within the mobile telecommunications network. Those number codes are assigned to the subscriptions and usually represent mobile telephone numbers.

It is known from the prior art to manage subscriptions by subscription management systems. These systems provision and configure subscriptions on security modules. Furthermore, so-called number portability services are known which enable to port a subscriber number code from one subscription to another. For example, documents WO 98/28899 A1 and WO 98/28897 A1 disclose number portability services using local switches and local service manager systems for call routing and call processing. Moreover, document US 2009/0003388 A1 discloses a method for synchronizing ported number data within a telecommunications network using a number portability database. One drawback of the prior art solution is that the subscriber is unreachable with the target MSISDN during the mobile number portability (MNP) phase.

US 2002/0197991 A1 relates to a technique for registering a roaming cell-phone in a visiting location as a local phone. During the registration process the phone of the user may not be reached.

US 8 918 143 B2 and US 2012/ 282891 A1 relate to alternative methods for switching between subscriptions.

It is an object of the invention to combine a method for changing a subscription for a mobile telecommunications network on a security module with a number portability service without any times of unavailability of the security module.

This object is solved by the method of claim 1 and by the system of claim 8, respectively. Preferred embodiments of the invention are defined in the dependent claims.

The method of the invention performs a change of a subscription for a mobile telecommunications network on the security module. In the method of the invention, an old subscription being initially activated on a security module is to be substituted by a new subscription, each of the old and new subscriptions being associated with a unique subscriber identity and a number code being assigned to the old subscription. The number code is provided for calling the subscriber identity (i.e. the subscriber associated with the subscriber identity) of the old subscription via the mobile telecommunications network. The security module is inserted or integrated in a mobile equipment (e.g. a mobile phone) enabling the communication within the mobile telecommunications network.

In a preferred embodiment of the invention, the security module is a well-known SIM/USIM card (SIM = Subscriber Identity Module, USIM = Universal Subscriber Identity Module). Such cards are also named as UICCs (UICC = Universal Integrated Circuit Cards) and are inserted in a mobile equipment used for communication. The security module may also be a so-called embedded SIM/ USIM card or embedded UICC which is an integral part of the corresponding mobile equipment.

Preferably, the above mentioned subscriber identities refer to IMSIs (IMSI = International Mobile Subscriber Identity) according to the well-known standard 3GPP TS 23.003. Furthermore, the above mentioned number code is preferably a MSISDN (MSISDN = Mobile Subscriber ISDN number) according to the standard 3GPP TS 23.003.

In step a) of the method according to the invention, the new still deactivated subscription is loaded on the security module. In a step b), the number code of the old subscription is assigned to the new subscription via a number portability service while the new subscription loaded on the security module remains deactivated and the old subscription is still activated. Any known number portability service may be used for assigning (porting) the number code of the old subscription to the new subscription.

Upon completion of the number portability service in step b), the new subscription loaded on the security module is activated in step c). This results in a substitution of the old subscription by the new subscription. I.e., when the new subscription is activated, the old subscription will be deactivated because only one subscription can be active on a security module wherein the new subscription is activated in step c) by addressing the security module via the subscriber identity of the old subscription,
wherein steps a) and c) are performed by a subscription manager within the mobile telecommunications network and wherein the number portability service in step b) is invoked by the subscription manager.

The invention integrates a number portability service within a method for changing a subscription on a security module. Due to the fact that the new subscription is enabled or activated after having completed the number portability service, the security module will be reachable within the whole process of subscription change and number porting.

It should be noted that the old subscription advantageously loses its MSISDN after the MNP.

In another variant of the invention, an additional second number code besides the above defined number code is assigned to the old subscription. The second number code can also be used for calling the old subscriber identity via the mobile telecommunications network. The second number code is preferably a MSISDN according to the above standard 3GPP TS 23.003. When using a second number code, it is preferred to activate the new subscription in step c) by addressing the security module via the second number code. In another embodiment, the second number code of the subscription is also assigned to the new subscription via the number portability service upon completion of step c).

Step b) of porting the number code may be performed in different ways. In a preferred variant of step b), an entry in a number portability database is generated or changed in order to allocate the new subscription to the number code of the old subscription.

In another preferred embodiment, the connectivity within the mobile telecommunications network of the new subscription loaded on the security module is checked before performing step b). This ensures the correct operation of the new subscription before activating the same.

Besides the above method, the invention refers to a system for changing a subscription for a mobile telecommunications network on security module, wherein an old subscription being initially activated on the security module is to be substituted by a new subscription, each of the old and new subscriptions being associated with a unique subscriber identity and a number code being assigned to the subscription, where the number code is provided for calling the old subscriber identity of the old subscription via the mobile telecommunications network. This system is adapted to perform a method with the following steps:
a) loading the new deactivated subscription on the security module;
b) assigning the number code of the old subscription to the new subscription via a number portability service while the new subscription loaded on the security module remains deactivated and the old subscription is still activated;
c) upon completion of the number portability service in step b), activating the new subscription loaded on the security module, resulting in a substitution of the old subscription by the new subscription.

Preferably, the above described system is adapted to perform one or more preferred embodiments of the method according to the invention.

Embodiments of the invention will be described in the following by the accompanying drawings wherein:
- Fig. 1: is a flow chart showing a method according to a first embodiment of the invention; and
- Fig. 2: is a flow chart showing a method according to a second embodiment of the invention.

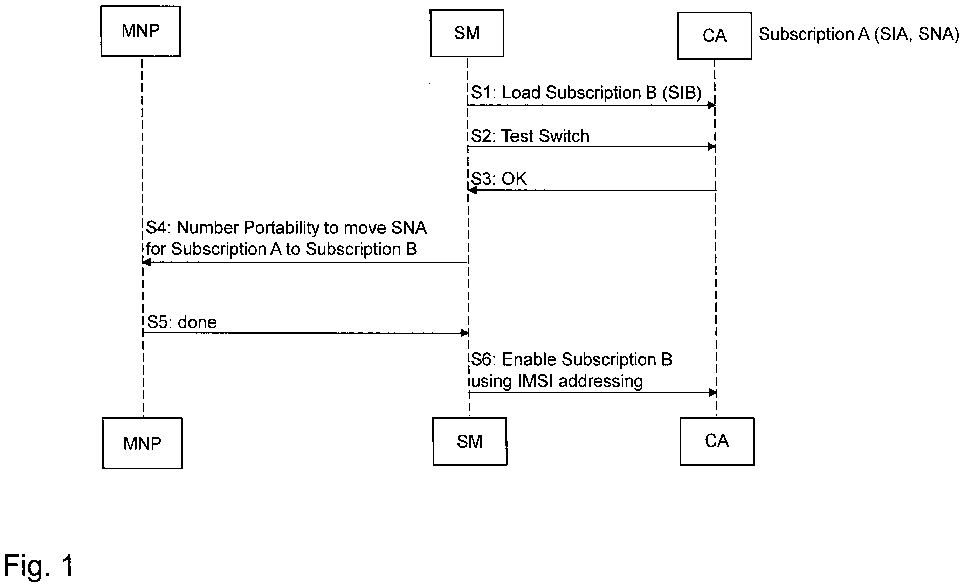

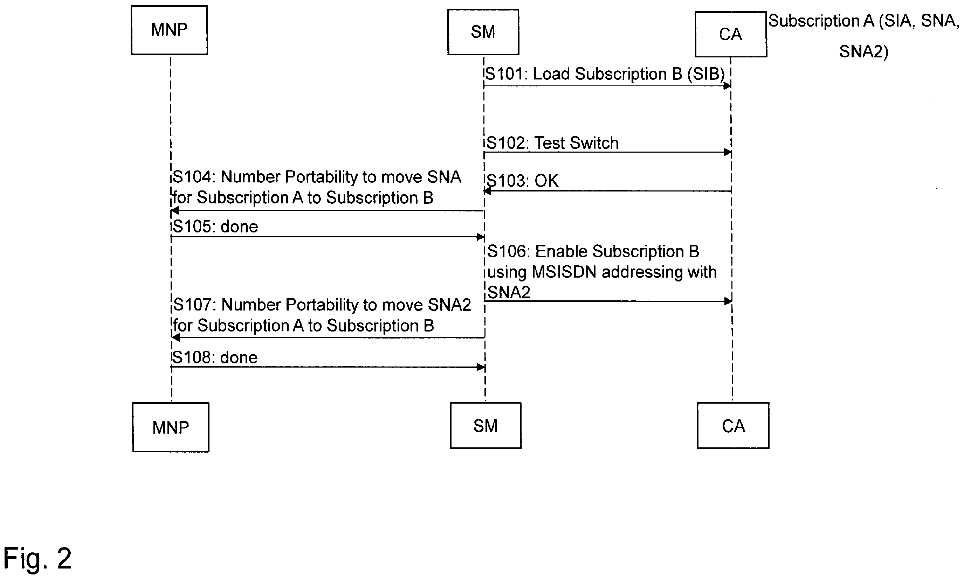

In the following, the invention will be described based on a security module in the form of a UICC designated as CA in Fig. 1 and Fig. 2. This card CA is inserted in a mobile equipment (e.g. a mobile phone) enabling the communication of a user with other users in a mobile telecommunications network, such as a GSM or UMTS network. Instead of a conventional UICC, the security module may also be an embedded UICC being an integral part of the corresponding mobile equipment.

For the communication within the mobile telecommunications network, a subscription is stored on the card CA. It is possible to change this subscription via a subscription manager SM which is an entity for managing subscriptions on corresponding cards CA. At the beginning of the method shown in Fig. 1, an activated subscription A is stored on the card CA. This subscription is identified by a well-known IMSI (also named as subscriber identity in the following) according to standard 3GPP TS 23.003. In Fig. 1, the IMSI of subscription A is designated as SIA. Moreover, a well-known MSISDN (phone number) is associated with subscription A. This MSISDN (also named as subscriber number in the following) is designated as SNA in Fig. 1.

By the use of the above mentioned subscription manager SM, the subscription A can be substituted by a new subscription B. Additionally, the subscriber number SNA of the old subscription A can be ported to the new subscription B. According to step S1 of Fig. 1, the new subscription B having the IMSI/ subscriber identity SIB is loaded by the subscription manager SM on the card CA. The subscription B loaded on the card CA is not yet activated whereas the subscription A is the activated state. In steps S2 and S3 of Fig. 1, the connectivity for subscription B within the mobile telecommunications network is checked by the subscription manager SM. To do so, a test switch is sent in step S2 to the card CA. As the subscription B has connectivity, a corresponding confirmation "OK" is sent in step S3 back to the subscription manager SM. The connectivity check according to steps S2 and S3 is optional and may be omitted.

In order to port the subscriber number SNA from subscription A to subscription B, a number portability service MNP (MNP = Mobile Number Portability) is invoked by subscription manager SM in step S4. The number portability service MNP is implemented in a separate unit within the mobile telecommunications network. Any prior art method for porting mobile subscriber numbers may be performed by the number portability service MNP. In a preferred embodiment, the number portability service uses a number portability database including entries associating subscriber numbers with corresponding subscriber identities. When using such a database for porting the subscriber number SNA, an entry in the number portability database is generated or edited in order to associate the subscriber number SNA with the new subscriber identity SIB of subscription B. After having completed the number porting, the number portability service MNP will send in step S5 a confirmation "done" to the subscription manager SM. Up to now, the subscription B is still deactivated with the consequence that the card CA and the associated mobile equipment are still reachable via the active subscription A.

In step S6, the new subscription B is enabled/ activated on card CA by the subscription manager SM. In the embodiment of Fig. 1, the subscription manager supports IMSI addressing so that the activation of the new subscription B is performed by addressing the card CA via the subscriber identity SIA of the still activated subscription A. Subscription A will become deactivated after having performed step S6. This is because only one subscription can be active on the card CA so that the activation of subscription B will result in the deactivation of subscription A. Due to the fact that the number portability service MNP is performed before enabling subscription B, the mobile equipment will be reachable during the whole process of changing the subscription and porting the subscription number.

Fig. 2 shows a flow chart illustrating a second embodiment of the invention. Analogously to the first embodiment, the subscription A identified by the IMSI/ subscriber identity SIA is initially activated on the card CA and shall be changed to the subscription B by the subscription manager SM in combination with the number portability service MNP. However, contrary to Fig. 1, two MSISDNs/subscriber numbers (phone numbers) SNA and SNA2 are assigned to subscription A.

In step S101 of Fig. 2, the new deactivated subscription B having the IMSI/ subscriber identity SIB is loaded on the card CA. Thereafter, an optional connectivity check for subscription B is performed in steps S102 and S103. To do so, a test switch is sent from the subscription manager SM in step S102 to card CA. This test switch is answered by a confirmation "OK" in step S103. In step S104, the subscriber number SNA is ported from subscription A to subscription B. To do so, the number portability service MNP is invoked by subscription manager SM. After having completed the number portability service, a confirmation "done" is sent in step S105 from the number portability service MNP to the subscription manager SM.

Contrary to the embodiment of Fig. 1, the subscription manager SM in Fig. 2 does not support IMSI addressing. Hence, for activating the subscription B loaded on the card CA, IMSI identities cannot be used. Instead, the subscription manager SM enables/activates subscription B in step S106 by using MSISDN addressing. I.e., the second MSISDN number SNA2 assigned to subscription A is used for activating subscription B. After having completed step S106, the subscriber number SNA is assigned to the new activated subscription B. Analogously to the embodiment of Fig. 1, the porting of the subscriber number SNA from subscription A to subscription B is performed without any times of unavailability of the mobile equipment associated with the card CA.

Optionally, the other subscriber number SNA2 may also be ported in the additional steps S107 and S108. In step S107, the number portability service MNP is invoked once again by subscription manager SM to move the subscriber number SNA2 for subscription A to subscription B. Upon completion of the number porting, a confirmation "done" is sent in step S108 from the number portability service MNP to the subscription manager SM. After having performed steps S107 and S108, subscription B activated on the card CA can also be reached via the second subscriber number SNA2.

The invention as described in the foregoing has several advantages. Particularly, a method for changing an old subscription to a new subscription on a security module is combined with a number portability service, thus enabling the use of the subscriber number assigned to the old subscription for the new subscription. Moreover, the invention ensures a seamless transfer of subscriber numbers from old to new subscriptions without any times in which the mobile equipment associated with the security module is unavailable or unreachable.

## Claims

1. A method for changing a subscription (A, B) for a mobile telecommunications network on a security module (CA) inserted in a mobile equipment, where an old subscription (A) being initially activated on the security module (CA) is to be substituted by a new subscription (B), each of the old and new subscriptions (A, B) being associated with a unique subscriber identity (SIA, SIB) and a number code (SNA) being assigned to the old subscription (A), where the number code (SNA) is provided for calling the subscriber identity (SIA) of the old subscription (A) via the mobile telecommunications network, the method comprising the following steps:
a) loading the new deactivated subscription (B) on the security module (CA); **characterized by**
b) assigning the number code (SNA) of the old subscription (A) to the new subscription (B) via a number portability service (MNP) while the new subscription (B) loaded on the security module (CA) remains deactivated and the old subscription (A) is still activated;
c) upon completion of the number portability service (MNP) in step b), activating the new subscription (B) loaded on the security module (CA), resulting in a substitution of the old subscription (A) by the new subscription (B),
wherein the new subscription (B) is activated in step c) by addressing the security module (CA) via the subscriber identity (SIA) of the old subscription (A),
wherein steps a) and c) are performed by a subscription manager (SM) within the mobile telecommunications network and
wherein the number portability service (MNP) in step b) is invoked by the subscription manager (SM).

2. The method according to claim 1, wherein the security module (CA) is a SIM/USIM card or an embedded SIM/USIM card.

3. The method according to claim 1 or 2, wherein each subscriber identity (SIA, SIB) is an IMSI (IMSI = International Mobile Subscriber Identity) according to standard 3GPP TS 23.003 and the number code (SNA) is a MSISDN (MSISDN = Mobile Subscriber ISDN Number) according to standard 3GPP TS 23.003.

4. The method according to one of the preceding claims, wherein an additional second number code (SNA2) is assigned to the old subscription (A), where the new subscription (B) is activated in step c) by addressing the security module (CA) via the second number code (SNA2) instead of the subscriber identity (SIA).

5. The method according to claim 4, wherein upon completion of step c) the second number code (SNA2) of the old subscription (A) is assigned to the new subscription (B) via the number portability service (MNP).

6. The method according to one of the preceding claims, wherein in step b) an entry in a number portability database is generated or changed in order to allocate the new subscription (B) to the number code (SNA) of the old subscription (A).

7. The method according to one of the preceding claims, wherein the connectivity within the mobile telecommunications network of the new subscription (B) loaded on the security module (CA) is checked before performing step b).

8. A system for changing a subscription (A, B) for a mobile telecommunications network on a security module (CA) inserted in a mobile equipment, where an old subscription (A) being initially activated on the security module (CA) is to be substituted by a new subscription (B), each of the old and new subscriptions (A, B) being associated with a unique subscriber identity (SIA, SIB) and a number code (SNA) being assigned to the old subscription (A), where the number code (SNA) is provided for calling the subscriber identity (SIA) of the old subscription (A) via the mobile telecommunications network, the system being adapted to perform a method as defined in any of claims 1 to 7.

## Patentansprüche

1. Verfahren zum Ändern eines Abonnements (A, B) für ein Mobilfunknetz auf einem in ein mobiles Gerät eingesetzten Sicherheitsmodul (CA), wo ein altes Abonnement (A), das zunächst auf dem Sicherheitsmodul (CA) aktiviert wurde, durch ein neues Abonnement (B) ersetzt werden soll, wobei jedes der alten und neuen Abonnements (A, B) einer eindeutigen Teilnehmeridentität (SIA, SIB) zugeordnet ist und dem alten Abonnement (A) ein Nummercode (SNA) zugeordnet ist, wobei der Nummercode (SNA) zum Abrufen der Teilnehmeridentität (SIA) des alten Abonnements (A) über das Mobilfunknetz vorgesehen ist, wobei das Verfahren die folgenden Schritte umfasst:
a) Laden des neuen deaktivierten Abonnements (B) auf das Sicherheitsmodul (CA); **gekennzeichnet durch**
b) Zuordnen des Nummercodes (SNA) des alten Abonnements (A) zum neuen Abonnement (B) über einen Nummemportabilitätsdienst (MNP), während das auf das Sicherheitsmodul (CA) geladene neue Abonnement (B) deaktiviert bleibt und das alte Abonnement (A) weiterhin aktiviert ist;
c) nach Abschluss des Nummernportabilitätsdienstes (MNP) in Schritt b) Aktivieren des neuen Abonnements (B), das auf das Sicherheitsmodul (CA) geladen ist, was zu einer Ersetzung des alten Abonnements (A) durch das neue Abonnement (B) führt,
wobei das neue Abonnement (B) in Schritt c) aktiviert wird, indem das Sicherheitsmodul (CA) über die Teilnehmeridentität (SIA) des alten Abonnements (A) angesprochen wird,
wobei die Schritte a) und c) von einem Abonnentenmanager (SM) innerhalb des Mobilfunknetzes durchgeführt werden und
wobei der Nummemportabilitätsdienst (MNP) in Schritt b) durch den Abonnementmanager (SM) aufgerufen wird.

2. Verfahren nach Anspruch 1, wobei das Sicherheitsmodul (CA) eine SIM/USIM-Karte oder eine eingebettete SIM/USIM-Karte ist.

3. Verfahren nach Anspruch 1 oder 2, wobei jede Teilnehmeridentität (SIA, SIB) eine IMSI (IMSI = International Mobile Subscriber Identity) nach Standard 3GPP TS 23.003 und der Nummercode (SNA) eine MSISDN (MSISDN =Mobile Subscriber ISDN Number) nach Standard 3GPP TS 23.003 ist.

4. Verfahren nach einem der vorhergehenden Ansprüche, wobei dem alten Abonnement (A) ein zusätzlicher zweiter Nummercode (SNA2) zugeordnet wird, wobei das neue Abonnement (B) in Schritt c) aktiviert wird, indem das Sicherheitsmodul (CA) über den zweiten Nummercode (SNA2) anstelle der Teilnehmeridentität (SIA) angesprochen wird.

5. Verfahren nach Anspruch 4, wobei nach Abschluss von Schritt c) der zweite Nummercode (SNA2) des alten Abonnements (A) dem neuen Abonnement (B) über den Nummernportabilitätsdienst (MNP) zugeordnet wird.

6. Verfahren nach einem der vorhergehenden Ansprüche, wobei in Schritt b) ein Eintrag in einer Nummernportabilitätsdatenbank erzeugt oder geändert wird, um das neue Abonnement (B) dem Nummerncode (SNA) des alten Abonnements (A) zuzuordnen.

7. Verfahren nach einem der vorhergehenden Ansprüche, wobei die Konnektivität innerhalb des Mobilfunknetzes des neuen Abonnements (B), das auf das Sicherheitsmodul (CA) geladen ist, vor Durchführung von Schritt b) überprüft wird.

8. System zum Ändern eines Abonnements (A, B) für ein Mobilfunknetz auf einem Sicherheitsmodul (CA), das in ein mobiles Gerät eingesetzt wird, wo ein altes Abonnement (A), das anfänglich auf dem Sicherheitsmodul (CA) aktiviert worden ist, durch ein neues Abonnement (B) ersetzt werden soll, wobei jedes der alten und neuen Abonnements (A, B) einer eindeutigen Teilnehmeridentität (SIA, SIB) zugeordnet ist und dem alten Abonnement (A) ein Nummerncode (SNA) zugeordnet ist, wobei der Nummerncode (SNA) zum Abrufen der Teilnehmeridentität (SIA) des alten Abonnements (A) über das Mobilfunknetz vorgesehen ist, wobei das System angepasst ist, um ein Verfahren gemäß einem der Ansprüche 1 bis 7 durchzuführen.

## Revendications

1. Procédé destiné à modifier un abonnement (A, B) pour un réseau de télécommunications mobiles sur un module de sécurité (CA) inséré dans un équipement mobile, où un ancien abonnement (A) étant initialement activé sur le module de sécurité (CA) doit être remplacé par un nouvel abonnement (B), chacun des abonnements ancien et nouveau (A, B) étant associé à une identité d'abonné unique (SIA, SIB), et un code à chiffres (SNA) étant attribué à l'ancien abonnement (A) ; où le code à chiffres (SNA) est prévu pour appeler l'identité d'abonné (SIA) de l'ancien abonnement (A) via le réseau de télécommunications mobiles, le procédé comprenant les étapes consistant à :
a) charger le nouvel abonnement désactivé (B) sur le module de sécurité (CA), **caractérisé par**
b) attribuer le code à chiffres (SNA) de l'ancien abonnement (A) au nouvel abonnement (B) via un service de transférabilité de numéro (MNP) tandis que le nouvel abonnement (B) chargé sur le module de sécurité (CA) demeure désactivé et que l'ancien abonnement (A) est encore activé ;
c) au terme du service de transférabilité de numéro (MNP) lors de l'étape b), activer le nouvel abonnement (B) chargé sur le module de sécurité (CA), avec pour résultat un remplacement de l'ancien abonnement (A) par le nouvel abonnement (B),
dans lequel le nouvel abonnement (B) est activé lors de l'étape c) en adressant le module de sécurité (CA) via l'identité d'abonné (SIA) de l'ancien abonnement (A) ;
dans lequel les étapes a) et c) sont réalisées par un gestionnaire d'abonnements (SM) dans le réseau de télécommunications mobiles, et
dans lequel le service de transférabilité de numéro (MNP) lors de l'étape b) est appelé par le gestionnaire d'abonnements (SM).

2. Procédé selon la revendication 1, dans lequel le module de sécurité (CA) est une carte SIM/USIM ou une carte SIM/USIM intégrée.

3. Procédé selon la revendication 1 ou 2, dans lequel chaque identité d'abonné (SIA, SIB) est une identité internationale d'abonnement mobile (IMSI, International Mobile Subscriber Identity) conformément à la norme 3GPP TS 23.003, et le code à chiffres (SNA) est un numéro ISDN d'abonnement mobile (MSISDN, Mobile Subscriber ISDN Number) conformément à la norme 3GPP TS 23.003.

4. Procédé selon l'une quelconque des revendications précédentes, dans lequel un second code à chiffres supplémentaire (SNA2) est attribué à l'ancien abonnement (A), où le nouvel abonnement (B) est activé lors de l'étape c) en adressant le module de sécurité (CA) via le second code à chiffres (SNA2), au lieu de l'identité d'abonné (SIA).

5. Procédé selon la revendication 4, dans lequel au terme de l'étape c), le second code à chiffres (SNA2) de l'ancien abonnement (A) est attribué au nouvel abonnement (B) via le service de transférabilité de numéro (MNP).

6. Procédé selon l'une quelconque des revendications précédentes, dans lequel lors de l'étape b), une entrée dans une base de données de transférabilité de numéro est générée ou modifiée afin d'attribuer le nouvel abonnement (B) au code à chiffres (SNA) de l'ancien abonnement (A).

7. Procédé selon l'une quelconque des revendications précédentes, dans lequel la connectivité dans le réseau de télécommunications mobiles du nouvel abonnement (B) chargé sur le module de sécurité (CA) est vérifiée avant réalisation de l'étape b).

8. Système destiné à modifier un abonnement (A, B) pour un réseau de télécommunications mobiles sur un module de sécurité (CA) inséré dans un équipement mobile, où un ancien abonnement (A) étant initialement activé sur le module de sécurité (CA) doit être remplacé par un nouvel abonnement (B), chacun des abonnements ancien et nouveau (A, B) étant associé à une identité d'abonné unique (SIA, SIB), et un code à chiffres (SNA) étant attribué à l'ancien abonnement (A), où le code à chiffres (SNA) est prévu pour appeler l'identité d'abonné (SIA) de l'ancien abonnement (A) via le réseau de télécommunications mobiles, le système étant apte à mettre en oeuvre un procédé selon l'une quelconque des revendications 1 à 7.
